(19) Europäisches Patentamt / European Patent Office / Office européen des brevets

(11) **EP 3 203 337 B1**

(12) **EUROPÄISCHE PATENTSCHRIFT**

(45) Veröffentlichungstag und Bekanntmachung des Hinweises auf die Patenterteilung:
**15.05.2019   Patentblatt 2019/20**

(51) Int Cl.:
**B65G 43/00** *(2006.01)*       **H02P 25/06** *(2016.01)*
**G05B 19/416** *(2006.01)*       **G05B 7/02** *(2006.01)*

(21) Anmeldenummer: **17153690.7**

(22) Anmeldetag: **30.01.2017**

(54) **VERFAHREN ZUM STEUERN DER BEWEGUNG EINER ANTRIEBSACHSE EINER ANTRIEBSEINHEIT**

METHOD FOR CONTROLLING THE MOVEMENT OF A DRIVE AXLE OF A DRIVE UNIT

PROCÉDÉ DE COMMANDE DU MOUVEMENT D'UN AXE D'UNE UNITÉ D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2016   AT 500732016**

(43) Veröffentlichungstag der Anmeldung:
**09.08.2017   Patentblatt 2017/32**

(73) Patentinhaber: **B&R Industrial Automation GmbH 5142 Eggelsberg (AT)**

(72) Erfinder:
• **Huber, Stefan**
  **5020 Salzburg (AT)**
• **Herzog, Helmut**
  **5020 Salzburg (AT)**

(74) Vertreter: **Patentanwälte Pinter & Weiss OG Prinz-Eugen-Straße 70 1040 Wien (AT)**

(56) Entgegenhaltungen:
**EP-A1- 0 419 705     EP-A1- 0 477 412
US-A- 4 603 286**

• **BIAGIOTTI LUIGI ET AL: "FIR filters for online trajectory planning with time- and frequency-domain specifications", CONTROL ENGINEERING PRACTICE, Bd. 20, Nr. 12, 1. Dezember 2012 (2012-12-01), Seiten 1385-1399, XP028945510, ISSN: 0967-0661, DOI: 10.1016/J.CONENGPRAC.2012.08.005**

## Beschreibung

Die gegenständliche Erfindung betrifft ein Verfahren zum Steuern der Bewegung einer Antriebsachse einer Antriebseinheit, wobei die Bewegung der Antriebsachse in einem Taktschritt durch die Vorgabe eines Sollwertes der Bewegung geregelt wird, wodurch sich eine Bewegungsphase der Bewegung der Antriebsachse ergibt, wobei ein Glättungsfilter in Form eines Mittelwertfilters den neuen Sollwert als Mittelwert aus den um eine Filterzeit in der Vergangenheit liegenden vergangenen Sollwerten berechnet.

Langstatorlinearmotoren werden oftmals als flexible Fördereinrichtungen in Herstellungs-, Bearbeitungs-, Montageanlagen, und ähnlichen Anlagen, verwendet. Ein Langstatorlinearmotor besteht bekanntermaßen im Wesentlichen aus einem Langstator in Form einer Vielzahl hintereinander angeordneter Antriebsspulen und einer Vielzahl von Transporteinheiten mit Erregungsmagneten (Permanent- oder Elektromagnete), die entlang des Langstators bewegt werden, indem die Antriebsspulen entsprechend mit einem elektrischen Strom beaufschlagt werden. Durch die Antriebsspulen wird ein bewegtes Magnetfeld erzeugt, das mit den Erregungsmagneten an den Transporteinheiten zusammenwirkt, um die die Transporteinheiten zu bewegen. Durch den Langstator wird somit eine Förderstrecke ausgebildet, entlang der die Transporteinheiten bewegt werden können. Damit ist es möglich jede Transporteinheit einzeln und unabhängig voneinander in ihrer Bewegung (Position, Geschwindigkeit, Beschleunigung) zu regeln. Dazu wird jede Antriebsspule durch einen zugeordneten Antriebsspulenregler angesteuert, der Vorgaben zur Bewegung einer Transporteinheit (z.B. in Form von Sollwerten für Position oder Geschwindigkeit) von einer übergeordneten Anlagensteuereinheit erhalten kann. Dabei können entlang der Förderstrecke auch Weichen oder Zusammenführungen Förderabschnitten des Langstatorlinearmotors vorgesehen sein. Oftmals ist der Langstator auch in Form von Fördersegmenten aufgebaut, wobei jedes Fördersegment einen Teil der Förderstrecke bildet und eine Anzahl von Antriebsspulen enthält. Meistens ist für ein Fördersegment ein Segmentregler vorgesehen, der alle Antriebsspulen des Fördersegments regelt. Die konstruktive Ausgestaltung des Langstatorlinearmotors, also z.B. die Ausführung der Antriebsspulen, der Förderstrecke, der Transporteinheiten, der Führungen der Transporteinheit, usw., kann natürlich verschieden sein, wobei das grundlegende Funktionsprinzip eines Langstatorlinearmotors aber gleich bleibt.

Eine Fördereinrichtung in Form eines Langstatorlinearmotors kann durchaus komplex werden mit mehreren Transportabschnitten, die durch Weichen miteinander verbunden sein können. Darauf können auch eine hohe Anzahl von Transporteinheiten gleichzeitig bewegt werden. Eine solche Fördereinrichtung stellt damit hohe Anforderungen an die Steuerung der Bewegung der einzelnen Transporteinheiten.

Die US 8,863,669 B2 beschreibt beispielsweise eine Fördereinrichtung in Form eines Langstatorlinearmotors mit einer Steuerung der Transporteinheiten. Darin wird die Förderstrecke in Zonen eingeteilt, wobei eine Transporteinheit in einer sollwertbasierten Zone anhand einer Sollwertvorgabe gesteuert wird und in einer grenzwertbasierten Zone mittels Vorgaben für die Endposition und Maximalwerten für die Geschwindigkeit und Beschleunigung gesteuert wird. Bei der grenzwertbasierten Steuerung werden diese Vorgaben in ein Bewegungsprofil umgewandelt, mit dem die Transporteinheit bewegt wird.

Es gibt verschiedene Möglichkeiten, wie die Bewegung einer Transporteinheit gesteuert bzw. geregelt werden kann. Denkbar wäre z.B. eine Abstandskopplung, bei der eine Slave-Transporteinheit an die Bewegung einer Master-Transporteinheit gekoppelt wird. Die Slave-Transporteinheit folgt der Master-Transporteinheit in einem vorgegebenen konstanten Abstand. Anstelle eines konstanten Abstandes könnte der Abstand entlang der Bewegung auch variieren, beispielsweise in Form einer vorgegebenen Kurve. Denkbar ist auch eine Bewegung in Form einer inversen Kinematik, bei der die Bewegung der Transporteinheit an die Bewegung einer anderen Einheit im Raum synchronisiert wird. Ein Beispiel hierfür ist das synchronisieren einer Transporteinheit an die Bewegung eines Roboterarms, der an einem Werkstück auf der Transporteinheit arbeiten ausführt. Auch eine Positionsregelung ist möglich, bei der eine Regeldifferenz vorgegeben wird, basierend auf welcher die Sollposition verändert wird, um die Regeldifferenz auf Null auszugleichen. Eine Anwendung hierfür könnte in der Ausübung einer Prozesskraft zwischen zwei Transporteinheiten sein. Die Erfindung ist allerdings nicht auf eine Fördereinrichtung in Form eines Langstatorlinearmotors beschränkt, sondern gilt allgemein für Antriebsachsen eines Antriebs.

In den meisten Fällen wird für eine Antriebsachse eine Zielgeschwindigkeit oder eine Zielposition angegeben, die vom Antrieb einzustellen oder anzufahren ist. Diese Art der Bewegung einer Antriebsachse wird in weitere Folge auch Zielmodus genannt. Die Zielgeschwindigkeit oder Zielposition wird im Zielmodus in ein Positionsprofil, oder äquivalent auch in ein Geschwindigkeitsprofil, umgewandelt, das von der Antriebsachse abgefahren wird. Ein typisches Beispiel für die Vorgabe von Zielgeschwindigkeiten sind Kräne, wo häufig mit einem Bedienelement, z.B. ein Joystick, die Verschwenkgeschwindigkeit des Kranarmes geregelt wird. Im Zielmodus werden oftmals auch Begrenzungen für den Ruck, der als zeitliche Ableitung der Beschleunigung definiert ist, vorgegeben, um die Belastung auf die Antriebsachse zu reduzieren. Hierzu werden häufig sogenannte Glättungsfilter verwendet, die die Beschleunigungsänderung (also den Ruck) limitieren. Solche Glättungsfilter sind häufig als Tiefpassfilter oder als Mittelwertfilter ausgeführt. In machen Anwendungen, wie z.B. bei Kränen, ist auch eine Beschränkung der zeitlichen Ableitung des Rucks erwünscht.

Es wäre natürlich auch möglich, Bewegungsprofile zu generieren, die von Haus aus ruckbegrenzt sind. Die Generierung solcher Bewegungsprofile ist aber sehr rechenintensiv. Insbesondere bei Anwendungen wie eine Fördereinrichtung in Form eines Langstatorlinearmotors, bei dem es eine Vielzahl von zu bewegenden Transporteinheiten gibt, stößt man damit rasch an die Grenzen der verfügbaren Rechenleistung. Daher werden in vielen Anwendungen nur einfache Bewegungsprofile für eine Antriebsachse erzeugt, die nachträglich in einem Glättungsfilter ruckbegrenzt werden.

Die US 4,603,286 A beschreibt ein Tiefpassfilter höherer Ordnung. Solche Tiefpassfilter sind allerdings ebenfalls rechenintensiv. Für eine Fördereinrichtung mit einer Vielzahl von Transporteinheiten stiege der Rechenaufwand enorm an, weshalb solche Tiefpassfilter für diese Anwendung kaum anwendbar sind. Abgesehen davon haben Tiefpassfilter die Eigenschaft, dass sich der Ausgang des Filters nur exponentiell an den Eingang angleicht, diesen aber nie erreicht. Das macht Tiefpassfilter für eine genaue Regelung mit geringem Schleppfehler (Abweichung zwischen Sollwert und Istwert) eher uninteressant.

Die EP 419 705 A1 und die EP 477 412 A1 beschreiben jeweils eine Ruckbegrenzung mit einem einfachen Mittelwertfilter, das den Mittelwert über eine vorgegebene Anzahl vergangener Positionsvorgaben bildet, um den neuen Sollwert für die Positionsvorgabe zu berechnen. Diese Mittelwertfilter benötigen zwar wenig Rechenleistung, setzen aber voraus, dass vergangene Positionsvorgaben bekannt sind, um einen Mittelwert aus den vergangenen Werten berechnen zu können. Das ist der Fall, wenn das Glättungsfilter immer aktiv ist, also vom Stillstand zu Beginn der Bewegung bis zum Ende der Bewegung.

Allerdings ist es möglich, dass ein Glättungsfilter in Form eines Mittelwertfilters erst während einer Bewegung einer Antriebsachse, also nicht von Anfang an, zugeschaltet werden soll, beispielsweise wenn von einem Bewegungsmodus, z.B. inverse Kinematik, auf den Zielmodus umgeschaltet wird. In diesem Fall kommt es zu einem unerwünschten Bewegungsverhalten der Antriebsachse, abhängig davon, wie der Glättungsfilter zum Zeitpunkt des Aktivierens initialisiert wird (für den vergangenen Zeitraum mit Werten gefüllt wird). Würde der Glättungsfilter einfach mit den vergangenen Sollwerten initialisiert werden, dann käme es zum Zeitpunkt des Aktivierens zu einem Sollwertsprung, was den Antriebsachsenregler und die Komponenten des Antriebs belasten würde. Im schlimmsten Fall könnte die Regelung instabil werden. Würde mit dem Sollwert zum Zeitpunkt des Aktivierens initialisiert, dann könnte ein Geschwindigkeits- oder Beschleunigungssprung die Folge sein, was ebenfalls unerwünscht ist und ähnliche Folgen haben kann.

Es ist daher eine Aufgabe der gegenständlichen Erfindung, ein Verfahren anzugeben, das es mit geringem Rechenaufwand erlaubt, die Bewegung einer Antriebsachse einer Antriebseinheit durch die Vorgabe von Sollwerten zu steuern, wobei ein Glättungsfilter in Form eines Mittelwertfilters auch während der Bewegung der Antriebsachse unter Einhaltung der vorgegebenen kinematischen Begrenzungen, insbesondere des Rucks oder der zeitlichen Änderung des Rucks, aktiviert werden kann.

Diese Aufgabe wird erfindungsgemäß durch die Merkmale von Anspruch 1 gelöst. Damit kann sichergestellt werden, dass die Bewegung auch nach dem Aktivieren des Glättungsfilters an der aktuellen Bewegungsphase stetig fortgesetzt wird. Gleichzeitig kann damit erreicht werden, dass der Ausgang des Glättungsfilters stetig und damit differenzierbar ist, womit die nochmalige zeitliche Ableitung der höchsten zeitlichen Ableitung in der Bewegungsphase, z.B. der Ruck oder die zeitliche Änderung des Rucks, begrenzt wird. Auf diese Weise kann der Glättungsfilter zu jedem Zeitpunkt, insbesondere auch während einer Bewegung der Antriebsachse, und nicht nur am Beginn der Bewegung, ohne negative Effekte aktiviert werden.

Vorzugsweise wird für die höchste zeitliche Ableitung des Sollwertes für das vergangene Zeitintervall eine konstante Funktion angenommen wird. Damit kann der Rechenaufwand für die Ermittlung des Sollwertprofils zum Initialisieren reduziert werden, da die niedrigeren Ableitungen, und damit auch das Sollwertprofil zum Initialisieren, einfach berechnet werden können.

Ganz besonders vorteilhaft ist es, wenn der Sollwert in jedem Taktschritt aktualisiert wird und in einem Ringpuffer gespeichert wird, wobei der aktualisierte Sollwert den ältesten Sollwert aus dem Ringbuffer schiebt, wobei die im Ringpuffer gespeicherten Sollwerte das Sollwertprofil zum Initialisieren des Glättungsfilters bilden. Auf diese Weise liegt man das Sollwertprofil zum Initialisieren des Glättungsfilters beim Aktiven des Glättungsfilters bereits vor, was den Aufwand und die Zeit zum Initialisieren deutlich reduziert.

Die gegenständliche Erfindung wird nachfolgend unter Bezugnahme auf die Figuren 1 bis 8 näher erläutert, die beispielhaft, schematisch und nicht einschränkend vorteilhafte Ausgestaltungen der Erfindung zeigen. Dabei zeigt

Fig.1 zeigt eine Antriebseinheit in Form einer Fördereinrichtung als Langstatotlinearmotor mit Transporteinheiten als Antriebsachsen,
Fig.2 eine Antriebsachse einer Antriebseinheit mit Antriebsachsenregler und Glättungsfilter,
Fig.3 ein typisches Bewegungsprofil ohne Glättungsfilter,
Fig.4 das Aktivieren des Glättungsfilters ohne erfindungsgemäße Initialisierung,
Fig.5 ein Ausführungsbeispiel eines Antriebsachsenreglers mit Glättungsfilter,
Fig.6 eine erfindungsgemäße Initialisierung des Glättungsfilters,
Fig.7 ein typisches Bewegungsprofil mit Initialisierung des Glättungsfilters während der Bewegung und

Fig.8 einen Ringbuffer für das Sollwertprofil zum Initialisieren des Glättungsfilters.

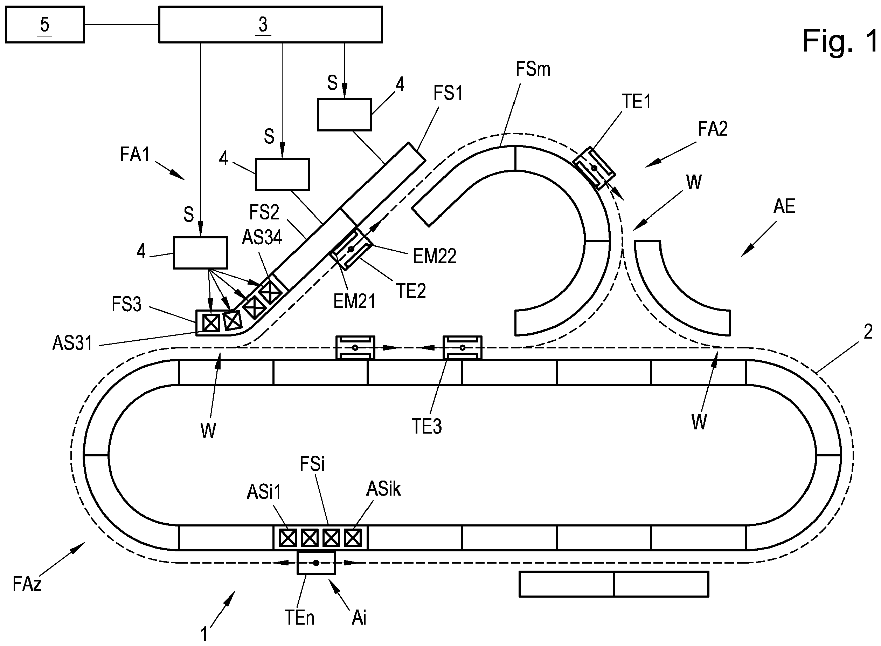

Der erfindungsgemäße Glättungsfilter 10 wird im nachfolgenden unter Bezugnahme auf die Fig.1 ohne Einschränkung der Allgemeinheit im Zusammenhang mit einer Transporteinheit TEi einer Fördereinrichtung 1 in Form eines Langstatorlinearmotors beschrieben. Eine Transporteinheit TEi der Fördereinrichtung 1 wird dabei als angetriebene Antriebsachse Ai angesehen und die Fördereinrichtung 1 bildet die Antriebseinheit AE. Ein Langstatorlinearmotor als Fördereinrichtung 1 hat damit so viele Antriebsachsen Ai wie Transporteinheiten TEi darauf bewegt werden.

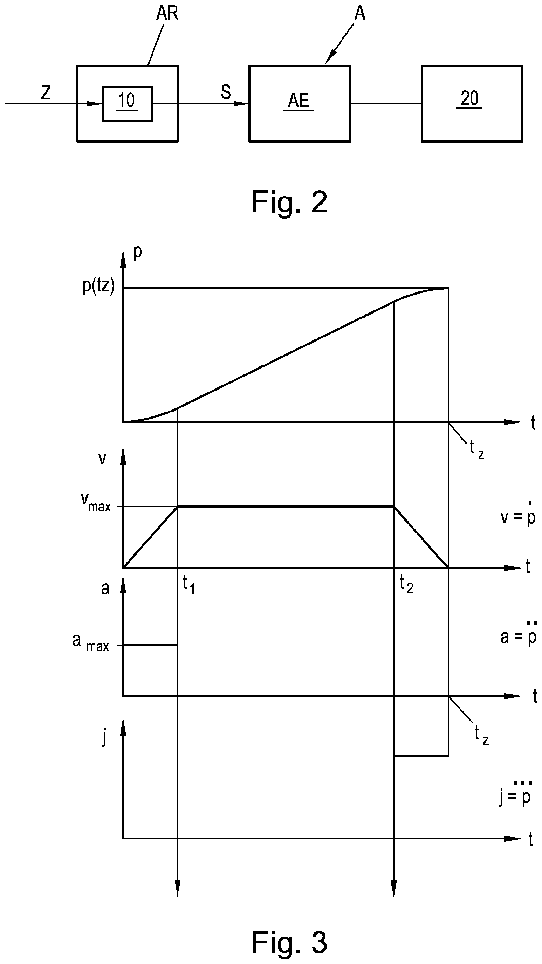

Allerdings ist anzumerken, dass der Glättungsfilter 10 ganz allgemein an angetriebenen Antriebsachsen A einer Antriebseinheit AE (Fig.2), angewendet werden kann, wobei die angetriebene Antriebsachse A durch einen Antriebsachsenregler AR und Sollwerten S, z.B. in Form von Positionen p oder Geschwindigkeit v, geregelt wird. Der Glättungsfilter 10 kann dabei im Antriebsachsenregler AR implementiert sein, kann aber auch getrennt davon implementiert sein. Eine Antriebsachse A einer Antriebseinheit AE bewegt einen beweglichen Teil 20 des Antriebs gemäß den vorgegebenen Sollwerten S in eine mögliche Bewegungsrichtung. Je nach Anzahl der möglichen Bewegungsrichtungen der Antriebseinheit AE spricht man von einem ein- oder mehrachsigen Antrieb. Beispielsweise ist ein herkömmlicher Elektromotor zum Bewegen einer damit angetriebenen Einheit in eine Richtung (rotativ oder translatorisch) ein einachsiger Antrieb mit einer Antriebsachse A einer Antriebseinheit AE. Ein Beispiel hierfür ist z.B. ein einachsiger Antrieb für einen Aufzug oder der Verschwenkantrieb eines Kranes. Die Schiebetür des Aufzugs wird ebenfalls von einem einachsigen Antriebs bewegt. Der Antrieb eines Arbeitstisches, der in der Ebene durch eine Antriebseinheit AE in beide Richtungen bewegt werden kann, wäre ein zweiachsiger Antrieb. Ebenso ist eine Transporteinheit TEi, die mit Antriebsspulen ASij der Fördereinrichtung 1 zusammenwirkt, eine Antriebsachse Ai mit Bewegungsrichtung in Richtung der Förderstrecke 2. Die Transporteinheit TEi stellt dann den beweglichen Teil 20 dar.

In Fig.1 ist ein beispielhaft ein beliebiger Aufbau einer Fördereinrichtung 1 mit einer Förderstrecke 2 (angedeutet durch die strichlierte Linie) dargestellt. Die Fördereinrichtung 1 ist als Langstatorlinearmotor ausgeführt und es sind eine Vielzahl von Transporteinheiten TEi, i=1, ..., x vorgesehen, die entlang der Förderstrecke 2 bewegt werden können. Die Förderstrecke 2 wird im Wesentlichen durch den Langstator des Langstatorlinearmotors 1 vorgegeben. Im gezeigten Ausführungsbeispiel sind eine Reihe von Fördersegmente FSi, i=1, ..., y vorgesehen, die die Bahn der Transporteinheiten TEi, also die Förderstrecke 2, definieren. Einzelne Förderabschnitte FAi, i=1, ..., z der Förderstrecke 2 werden durch eine Reihe von nebeneinander angeordneten Fördersegmenten FSi gebildet. Die Fördersegmente FSi bilden dabei einen Teil des Langstators des Langstatorlinearmotors. Die Fördersegmente FSi sind in einer geeigneten Konstruktion ortsfest angeordnet und bilden in der Regel auch Führungselemente aus, entlang denen die Transporteinheit TEi geführt werden können. Jeder Förderabschnitt FAi umfasst zumindest ein Fördersegment FSi, normalerweise mehrere Fördersegmente FSi. Einzelne Förderabschnitte FAi, bzw. Fördersegmente FSi einzelner Förderabschnitte FAi (wie z.B. die Fördersegmente FS1, FSm) können sich zum Teil auch überlappen, insbesondere an Stellen der Förderstrecke 2 an der ein Übergang von einem Förderabschnitt FAi auf einen anderen Förderabschnitt FAi (wie z.B. vom Förderabschnitt FA1 auf den Förderabschnitt FA2) stattfindet. Es kann auch vorgesehen sein, dass abschnittsweise an beiden Seiten der Förderstrecke 2 Fördersegmente FSi angeordnet sind. Es können auch Weichen W vorgesehen sein, an denen (je nach Förderrichtung einer Transporteinheit TEi) zwei Förderabschnitte FAi zusammengeführt werden oder eine Aufteilung auf zwei Förderabschnitte FAi stattfindet. Es ist nachvollziehbar, dass damit eine nahezu beliebig aufgebaute Förderstrecke 2 gebildet werden kann, die sich auch nicht nur in einer zweidimensionalen Ebene befinden muss, sondern sich auch dreidimensional erstrecken kann.

Jedes Fördersegment FSi umfasst eine Anzahl k von Antriebsspulen ASij, j=1, ..., k, wobei die Anzahl k nicht bei jedem Fördersegmente FSi gleich sein muss. In Fig.1 sind der Übersicht halber nur Antriebsspulen ASij einiger Fördersegmente FSi dargestellt. Jede Transporteinheit TEi umfasst eine Anzahl von Erregungsmagnete EMij, j=1, ..., l, vorzugsweise an beiden Seiten (bezogen auf die Förderrichtung, die durch die Pfeile an den Transporteinheiten TEi angedeutet ist) der Transporteinheit TEi. Die Antriebsspulen ASij wirken im Betrieb der Fördereinrichtung 1 in bekannter Weise nach dem Motorprinzip mit den Erregungsmagneten EMij der Transporteinheiten TEi zusammen. Werden die Antriebsspulen ASij im Bereich einer Transporteinheit TEi mit einem Spulenstrom bestromt, entsteht ein magnetischer Fluss der in Zusammenwirken mit den Erregungsmagneten EMij eine Kraft auf die Transporteinheit TEi. Diese Kraft kann je nach Spulenstrom bekanntermaßen eine vortriebskraftbildende und eine seitenkraftbildende Kraftkomponenten umfassen. Die vortriebskraftbildende Kraftkomponente dient im Wesentlichen der Bewegung der Transporteinheit TEi und die seitenkraftbildende Kraftkomponente kann zur Führung der Transporteinheit TEi, aber auch zur Festlegung der Bahn der Transporteinheit TEi in einer Weiche W genutzt werden. Auf diese Weise kann jede Transporteinheit TEi einzeln und unabhängig voneinander entlang der Förderstrecke 2 bewegt werden, indem die Antriebsspulen ASij im Bereich jeder Transporteinheit TEi gemäß der durchzuführenden Bewegung mit einem entsprechenden Spulenstrom bestromt werden.

Diese grundlegende Funktionsweise eines Langstatorlinearmotors ist hinlänglich bekannt, sodass nicht weiter darauf eingegangen wird. Für die gegenständliche Erfindung ist es auch unerheblich, wie die Transporteinheiten TEi, die Fördersegmente FSi, die Antriebsspulen ASij, die Erregungsmagnete EMij, usw. konstruktiv konkret ausgestaltet sind, weshalb auch darauf nicht näher eingegangen wird.

Um die Bewegung der einzelnen Transporteinheiten TEi zu steuern ist eine Transporteinheitenregelung 3 vorgesehen, in der die Sollwerte S für die Bewegung der Transporteinheiten TEi generiert werden. Selbstverständlich können gleichwertig auch mehrere Transporteinheitenregelungen 3 vorgesehen sein, die jeweils einem Teil der Fördereinrichtung 1, z.B. einem Förderabschnitt FAi, zugeordnet sind und die Bewegung der Transporteinheiten TEi auf diesem Teil kontrollieren. Zusätzlich können noch Segmentregelungseinheiten 4 vorgesehen sein, die einem Fördersegment FSi (oder auch mehreren Födersegmenten FSi oder auch einem Teil eines Fördersegments FSi) zugeordnet sind und die die Sollwertvorgaben der zugehörigen Transporteinheitenregelung 3 für eine Transporteinheit TEi in Stellgrößen, wie beispielsweise in Spulenströme, für die Antriebsspulen ASij des Fördersegments FSi umsetzen. Die Segmentregelungseinheiten 4 könnten aber auch in einer Transporteinheitenregelung 3 implementiert sein. Die Transporteinheitenregelung 3, gegebenenfalls in Kombination mit der zugehörigen Segmentregelungseinheit 4, bildet dabei den Antriebsachsenregler AR einer Antriebsachse Ai.

Als Sollwerte S werden Positionen $p_i$ der Antriebsachse A, z.B. der Transporteinheiten TEi, oder gleichwertig auch Geschwindigkeiten $v_i$, vorgegeben. Das bedeutet, dass in jedem Taktschritt n der Regelung für jede Antriebsachse A ein neuer Sollwert S berechnet wird, der im Taktschritt n durch den Antriebsachsenregler AR eingeregelt wird. In einem Antriebsachsenregler AR ist demnach ein geeigneter Regler implementiert, der die Sollwertvorgabe durch die Sollwerte S in eine geeignete Stellgröße für den Antrieb, beispielsweise in eine Kraft oder einen Spulenstrom wie bei einer Fördereinrichtung 1, umsetzt.

Der gewünschte Weg der Transporteinheiten TEi entlang der Förderstrecke 2 kann auch durch eine übergeordnete Fördereinrichtungsregelung 5 vorgegeben werden, in der beispielsweise eine Routenberechnung (welchen Weg soll einer Transporteinheit TEi nehmen?), eine Weichenarbitrierung (welche Transporteinheit TEi darf in eine Weiche einfahren?), eine Deadlockvermeidung (z.B. blockieren sich zwei Transporteinheiten TEi gegenseitig?), usw. stattfinden kann, um die Transporteinheiten TEi auf gewünschte Weise entlang der Förderstrecke 2 zu bewegen, z.B. um einen Fertigungs-, Montage-, oder anderen Prozess zu realisieren. Diese Bewegungsvorgabe für die Transporteinheiten TEi kann in der Transporteinheitenregelung 3 in Sollwertvorgaben für die Transporteinheiten TEi umgesetzt werden.

In Fig.3 ist beispielhaft ein typisches Bewegungsprofil für die Sollwertvorgabe zum Erreichen einer Zielposition $p(t_z)$ am Beispiel einer Transporteinheit TEi als Antriebsachse Ai dargestellt. Zu Beginn der Bewegung bei t=0 wird die Transporteinheit TEi mit vorgegebener maximaler Beschleunigung $a_{max}$ beschleunigt, bis zum Zeitpunkt $t_1$ eine vorgegebene maximale Geschwindigkeit $v_{max}$ erreicht wurde. Ab diesem Zeitpunkt $t_1$ wird die Bewegung mit konstanter Geschwindigkeit $v_{max}$ fortgesetzt, womit die Position p linear zunimmt. Zum Zeitpunkt $t_1$ wird die Beschleunigung abrupt vom maximaler Beschleunigung $a_{max}$ auf Null gesetzt, was einen unendlichen Ruck j bewirkt. Der Zeitpunkt $t_2$, ab dem die Verzögerung der Transporteinheit beginnt, ist so gewählt, dass die Transporteinheit TEi die Zielposition $p(t_z)$ mit Geschwindigkeit v=0 erreicht. Auch zum Zeitpunkt $t_2$, bei dem auf Verzögerung umgeschaltet wird, entsteht ein unendlicher Ruck j. Dieser Ruck j soll durch ein Glättungsfilter 10 in Form eines Mittelwertfilters begrenzt werden.

Der Glättungsfilter 10 bildet allgemein gesprochen das arithmetische Mittel $\overline{S}$ aus $n_R$ vergangenen Sollwerten S. Die Filterzeit $t_R$ ist definiert als $t_R = (n_R - 1)t_a$, mit der Abtastzeit $t_a$, die den Taktschritt n festlegt. In jedem Abtastzeitpunkt $n \cdot t_a$, also in jedem Taktschritt n, wird ein neuer Sollwert S berechnet. Wenn man das Sollwertprofil als zeitkontinuierliches Signal S(t) auffasst, kann der Glättungsfilter 10 mathematisch als Faltung des Sollwertsignals S(t) mit der Funktion

$$\frac{1}{t_R} 1_B,$$

B = $[0, t_R]$ formuliert werden:

$$1_B(x) = \begin{cases} 1 & \text{falls } x \in B \\ 0 & \text{sonst} \end{cases}$$

$$\overline{S}(t) = \left( S(t) * \frac{1}{t_R} 1_B \right)(t) = \frac{1}{t_R} \int_{-t_R}^{0} S(\delta - t) d\delta$$

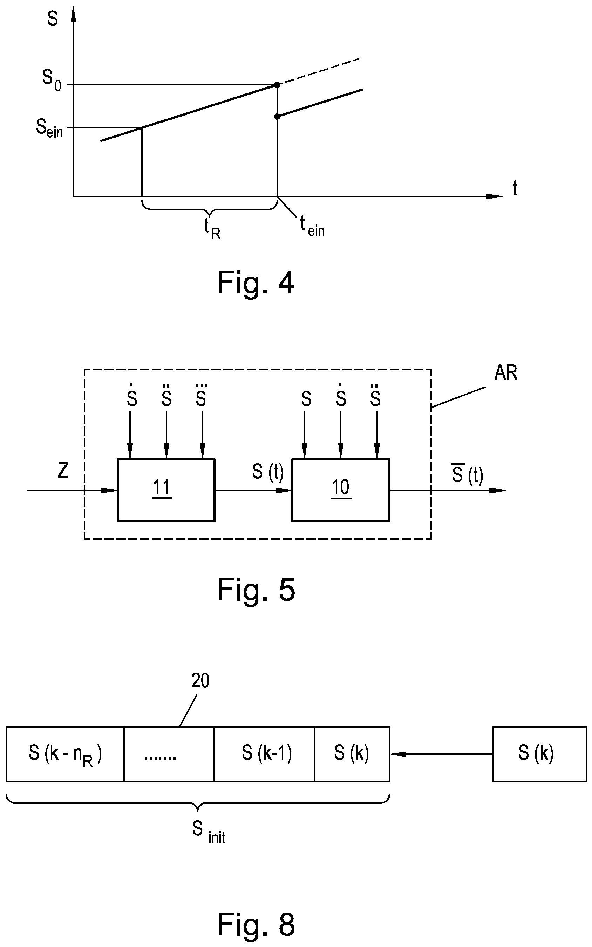

Daraus ist ersichtlich, dass für die Berechnung des Mittelwertes $\overline{S}$ Werte des Sollwertsignals S(t) der vergangenen Zeitspanne $t_R$ benötigt werden. Würde der Glättungsfilter 10 zum Zeitpunkt $t_{ein}$ (Fig.4) eingeschaltet werden, dann würde das Sollwertsignal S(t) folglich nicht mit dem aktuellen Sollwert $S_0$ fortgesetzt werden, sondern mit $S_{ein}$, was dem Mittelwert $\overline{S}$ des um die Filterzeit $t_R$ in der Vergangenheit liegenden Sollwertsignals S(t) entspricht. Wenn kein vergangenes Sollwertsignal $S(t<t_{ein})$ vorliegt, wäre der Sprung noch deutlicher, weil dann typischerweise $S(t<t_{ein})=0$ angenommen wird. Oftmals wird auch $S(t<t_{ein})=S_0$ angenommen, was aber einen Knick im Sollwertprofil gleichkommt, was zu einem Sprung in der zeitlichen Ableitung $\dot{S}$ des Sollwertes $S$ führt, was unerwünscht ist, da die Bewegung nicht stetig fortgesetzt werden würde. Das macht deutlich, dass das Aktivieren eines herkömmlichen Glättungsfilters 10 als Mittelwertfilter während einer Bewegung problematisch ist bzw. nicht ohne weiteres möglich ist.

Der Glättungsfilter 10 ist beispielsweise in der Transporteinheitenregelung 3, allgemein in einem Antriebsachsenregler AR, implementiert (Fig.5). Im Antriebsachsenregler AR, bzw. in der Transporteinheitenregelung 3, wird in einer Bewegungsprofileinheit 11 aus einem Bewegungsziel Z, z.B. eine Zielposition $p_z$ oder eine Zielgeschwindigkeit $v_z$, eine Sollwertvorgabe, in Form einer zeitlichen Abfolge von Sollwerten $S(t)$, erzeugt. Die Bewegungsprofileinheit 11 sorgt dabei für die Einhaltung von Grenzwerten für zeitliche Ableitungen $\dot{S}, \ddot{S}, \dddot{S}$ des Sollwertes $S(t)$, wie beispielsweise eine maximal zulässige Geschwindigkeit $v_{max}$, eine maximale zulässige Beschleunigung $a_{max}$ oder ein maximal zulässiger Ruck $j_{max}$. Die Bewegungsprofileinheit 11 sorgt dabei vorzugsweise auch für einen stetigen Verlauf des Sollwertes $S(t)$, z.B. der Position $p(t)$ oder der Geschwindigkeit $v(t)$. Das Bewegungsziel Z wird also in der Bewegungsprofileinheit 11 unter Einhaltung von vorgegebenen Grenzwerten in einen stetigen Verlauf der Sollwerte $S(t)$ umgewandelt. Beispielsweise wird ein Positionssprung zur Vorgabe einer neuen Zielposition $p_z$ in ein Positions- und Geschwindigkeitsprofil wie in Fig.3 dargestellt umgewandelt.

Es ist aber natürlich genauso denkbar, dass dem Antriebsachsenregler AR die Sollwerte $S(t)$ direkt vorgegeben werden und nicht in einer Bewegungsprofileinheit 11 ermittelt werden.

Ein Mittelwertfilter hat eine glättende Wirkung, d.h. es erhöht die Ableitbarkeit des Sollwertes $S(t)$ um eine Ordnung. War ein Eingangssignal in das Mittelwertfilter eine zweimal stetig differenzierbare Funktion, dann ist der Ausgang aus dem Mittelwertfilter eine dreimal stetig differenzierbare Funktion. Das ist genau die Wirkung, die mit dem Glättungsfilter 10 erzielt werden soll. Ist der Eingang in den Glättungsfilter 10 z.B. das Positionssignal $p(t)$ gemäß Fig.3, dann ist dieses Positionssignal $p(t)$ einmal stetig differenzierbar (Geschwindigkeit $v = \dot{p}$), aber nicht zweimal stetig differenzierbar (Beschleunigung $a = \ddot{p}$), da die Beschleunigung $a(t)$ keine stetige Funktion ist. Wenn das Positionssignal $p(t)$ aber mittelwertgefiltert wird, dann ist das gemittelte Positionssignal $\bar{p}$ zweimal stetig differenzierbar, also auch die Beschleunigung $a(t)$ eine stetige Funktion. In weiterer Folge ist dann die zeitliche Ableitung der stetigen Beschleunigung $a(t)$, also der Ruck $j = \dddot{p}$, begrenzt und nicht unendlich, wie in Fig.3.

Die x-mal stetig differenzierbaren Sollwerte $S(t)$ werden demnach im nachfolgenden Glättungsfilter 10 zu x+1-mal stetig differenzierbaren Sollwerten $\bar{S}(t)$ umgewandelt und als Ausgang ausgegeben. Dabei ist es dem Glättungsfilter 10 egal, welcher Sollwert $S(t)$ am Eingang angelegt wird. Wird als Solltwert $S(t)$ ein Positionssignal $p(t)$ oder Geschwindigkeitssignal $v(t)$ wie in Fig.3 am Eingang des Glättungsfilters 10 angelegt, dann erhält man am Ausgang des Glättungsfilters 10 einen ruckbegrenzten Sollwert $\bar{S}$. Wird am Eingang des Glättungsfilters 10 als Sollwert $S(t)$ ein einmal stetig differenzierbares Geschwindigkeitsprofil, das dem Positionssignal $p(t)$ in Fig.3 entspricht angelegt, dann erhält man am Ausgang einen Sollwert $\bar{S}$, dessen zweifache zeitliche Ableitung, also die zeitliche Ableitung des Rucks $j$, stetig ist. Damit wäre die zeitliche Ableitung des Rucks $j$ begrenzt, was oftmals bei Kränen gefordert wird.

Allgemein gesprochen ist der Ausgang des Glättungsfilters 10 als Mittelwertfilter bei einem zu erwartenden endlichen Eingangssignal stetig und weist damit insbesondere keine Sprungstellen auf. Dabei wird in jedem Taktschritt n ein gemittelter Sollwert $\bar{S}(t)$ berechnet.

Das erfindungsgemäße Vorgehen zum Initialisieren des Glättungsfilters 10 beim Aktivieren während einer Bewegung der Antriebsachse A wird nachfolgend für das einfachere Verständnis im Zeitbereich und für eine typische Bewegungsphase $(S,\dot{S},\ddot{S})$ der Bewegung der Antriebsachse A beschrieben.

Zum Zeitpunkt $t_{ein}$ des Aktivierens des Glättungsfilters 10 liegt eine aktuelle Bewegungsphase $(S_0,\dot{S}_0,\ddot{S}_0)$ vor, wobei $S_0$ den Sollwert $S(t)$ zum aktuellen Zeitpunkt $t_{ein}$ bezeichnet. Im Beispiel eines Positionssignals $p(t)$ als Sollwert $S(t)$ ergibt sich als erste zeitliche Ableitung die Geschwindigkeit $v(t)$ und als zweite zeitliche Ableitung die Beschleunigung $a(t)$ und damit eine aktuelle Bewegungsphase $(p_0, v_0, a_0)$, wobei $p_0$ die aktuelle Position, $v_0$ die aktuelle Geschwindigkeit und $a_0$ die aktuelle Beschleunigung angibt. Um den Glättungsfilter 10 auch während der Bewegung aktivieren zu können, wird der Glättungsfilter 10 erfindungsgemäß initialisiert, um beim Aktivieren das Fortsetzen der aktuellen Bewegungsphase $(S_0,\dot{S}_0,\ddot{S}_0)$ und eine Begrenzung der dritten zeitlichen Ableitung des Sollwertes $S(t)$ zu erreichen. Im Beispiel des Positionssignals $p(t)$ als Sollwert $S(t)$ ergibt sich damit eine Begrenzung des Rucks $j$.

Beim Aktivieren soll der gemittelte Sollwert $\bar{S}(t)$ als Ausgangssignal des Glättungsfilters 10 (Fig.5) die aktuelle Bewegungsphase $(S_0,\dot{S}_0,\ddot{S}_0)$ ganz unabhängig vom Sollwertsignal $S(t)$ für $t \geq t_{ein}$ stetig, also ohne Sprung und unter Einhaltung der kinematischen Limits, fortsetzen. Dazu wird der Glättungsfilter 10 für das um die Filterzeit $t_R$ in der Vergangenheit liegende Zeitintervall $[t_{ein}-t_R, t_{ein}]$ mit einem Sollwertprofil $S_{init}$ gefüllt, sodass die Eigenschaften $\bar{S}(t_{ein}) =$

$$\overline{\dot{S}}(t_{ein}) = \dot{S}_0, \quad \overline{\ddot{S}}(t_{ein}) = \ddot{S}_0$$

$S_0$, erfüllt sind.

Im einfachsten Fall wird die zweifache zeitliche Ableitung des Sollwerts $\ddot{S}(t)$ für das Zeitintervall $[t_{ein}\text{-}t_R, t_{ein}]$ gleich dem aktuellen Wert der zweifachen Ableitung des Sollwertes $\ddot{S}_0$ der aktuellen Bewegungsphase $(S_0, \dot{S}_0, \ddot{S}_0)$ gesetzt, also $\ddot{S}(t) = \ddot{S}_0$. Daraus ergibt sich unmittelbar, für den Mittelwert zum Zeitpunkt $t_{ein}$ des Aktivierens des Glättungsfilters

$$\overline{\ddot{S}}(t_{ein}) = \ddot{S}_0,$$

womit ein Teil der obigen Forderung erfüllt ist. Aus $\ddot{S}(t) = \ddot{S}_0$ ergibt sich unmittelbar für die einfache Ableitung $\dot{S}(t)$ des Sollwertes $S(t)$ vor dem Zeitpunkt $t_{ein}$ $\dot{S}(t) = \dot{S}(t_{ein}) + \ddot{S}_0 t$, wobei aus der vorgegebenen Bedingung

$$\overline{\dot{S}}(t_{ein}) = \dot{S}_0$$

folgt, dass

$$\dot{S}(t_{ein}) = \dot{S}_0 + \frac{t_R}{2}\ddot{S}_0$$

ist. Damit ergibt sich wiederum der Sollwert $S(t)$ zu

$$S(t) = S(t_{ein}) + \dot{S}(t_{ein})t + \frac{\ddot{S}_0}{2}t^2,$$

wobei aus der vorgegebenen Bedingung $\overline{S}(t_{ein}) = S_0$ folgt, dass

$$S(t_{ein}) = S_0 + \frac{\dot{S}(t_{ein})}{2}t_R - \frac{\ddot{S}_0}{6}t_R^2$$

ist. Setzt man alles ein, erhält man schließlich das gesuchte vergangene Sollwertsignal $S(t)$ für $t = [t_{ein}\text{-}t_R, t_{ein}]$, was dem Sollwertprtofil $S_{init}$ zum Initialisieren des Glättungsfilters 10 entspricht zu

$$S(t) = S_0 + \left(\dot{S}_0 + \ddot{S}_0\frac{t_R}{2}\right)\left(t + \frac{t_R}{2}\right) + a_0\left(\frac{t^2}{2} - \frac{t_R^2}{6}\right) = S_{init}.$$

Für den Fall des Positionssignals $p(t)$ als Sollwert $S(t)$ ergibt sich dann beispielsweise das Positionssignal $p(t)$ für das Zeitintervall $[t_{ein}\text{-}t_R, t_{ein}]$ zu

$$p(t) = p_0 + \left(v_0 + a_0\frac{t_R}{2}\right)\left(t + \frac{t_R}{2}\right) + a_0\left(\frac{t^2}{2} - \frac{t_R^2}{6}\right).$$

Selbstverständlich kann anstelle von $\ddot{S}(t) = \ddot{S}_0$ auch ein anderer Ansatz gewählt werden, solange $\overline{S}(t_{ein}) = S_0$,

$$\overline{\dot{S}}(t_{ein}) = \dot{S}_0, \quad \overline{\ddot{S}}(t_{ein}) = \ddot{S}_0$$

eingehalten wird und die Bewegung unter Einhaltung der vorgegebenen kinematischen Limits stetig fortgesetzt wird. Für $\ddot{S}(t)$ für das Zeitintervall $[t_{ein}\text{-}t_R, t_{ein}]$ kann daher auch eine andere geeignete Funktion f gewählt werden, der Mittelwert dem aktuellen Wert $\ddot{S}_0$ der zweifachen Ableitung entspricht. Die Funktion f muss daher im Zeitintervall $[t_{ein}\text{-}t_R, t_{ein}]$ stückweise zeitlich integrierbar sein.

Hier ist nochmals hervorzuheben, dass $S(t)$ oben lediglich das Sollwertprofil $S_{init}$ ist, mit dem der Glättungsfilter 10 für das vergangene Zeitintervall $[t_{ein}\text{-}t_R, t_{ein}]$ initialisiert wird. Die Bewegung wird für die Zeit $t \geq t_{ein}$ anhand der im Antriebsregler AR vorgegebenen Sollwerte $S(t)$ stetig unter Einhaltung der kinematischen Limits fortgesetzt, wobei auf die aktuelle Bewegungsphase $(S_0, \dot{S}_0, \ddot{S}_0)$ aufgesetzt wird.

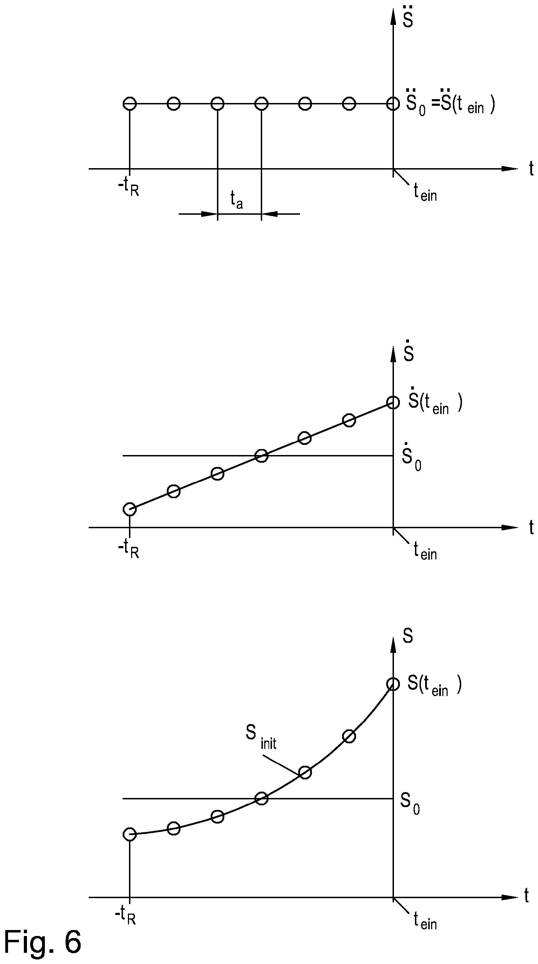

Das ist in Fig.6 dargestellt, wobei das Glättungsfilter 10 für das Zeitintervall $[t_{ein}\text{-}t_R, t_{ein}]$ mit den jeweiligen Werten an den Abtastzeitpunkten $t_a$ initialisiert wurde. Damit wird z.B. die Bewegung der Transporteinheit TEi zum Zeitpunkt $t_{ein}$ der Aktivierung des Glättungsfilters 10 stetig fortgesetzt. Im Falle einer Position $p(t)$ als Sollwert $S(t)$ ergibt sich z.B. ein beschleunigungsstetiger Ausgang des Glättungsfilters 10, wodurch der Ruck j begrenzt wird. Im Falle einer Geschwindigkeit $v(t)$ als Sollwert $S(t)$ ergibt sich z.B. analog dazu ein ruckstetiger Ausgang des Glättungsfilters 10, wodurch die Änderung des Rucks j begrenzt wird.

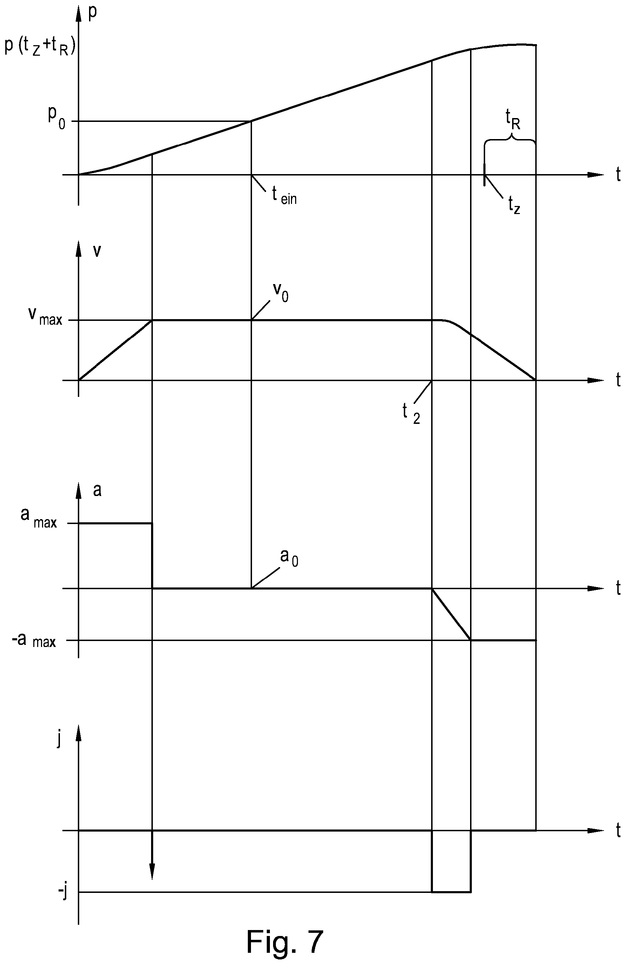

Die Wirkung des Glättungsfilters 10 ist in Fig.7 am Beispiel eines Positionssignals $p(t)$ als Sollwert $S(t)$ dargestellt. Es wird zu Beginn wieder ein Bewegungsprofil gemäß Fig.3 erzeugt. Zum Zeitpunkt $t_{ein}$ wird das Glättungsfilter 10 aktiviert. Die aktuelle Bewegungsphase $(p_0, v_0, a_0)$ wird nach dem Aktivieren fortgesetzt. Zum Zeitpunkt $t_2$ wird die Transporteinheit TEi wieder verzögert, wobei nun der Glättungsfilter 10 eingreift und die Beschleunigung a stetig auf

EP 3 203 337 B1

die maximale Verzögerung $-a_{max}$ absenkt, womit der entstehende Ruck j begrenzt wird. In Fig.7 ist weiters erkennbar, dass sich durch den Glättungsfilter 10 eine Zeitverzögerung um die Filterzeit $t_R$ ergibt, d.h., dass die angestrebte Zielposition erst um die Filterzeit $t_R$ später erreicht wird (verglichen zu Fig.3 ohne Glättungsfilter 10).

Die obige zeitkontinuierliche Betrachtung kann noch diskretisiert werden, was für die Implementierung in einem digitalen Antriebsregler AR vorteilhaft ist. Aus den zeitkontinuierlichen Signalen werden endliche Folgen und an die Stelle der Faltungen treten arithmetische Mittel. Anstelle des Zeitintervalls $[t_{ein}-t_R, t_{ein}]$ wird nun ein Index $k \in \{k_{ein}-n_R+1,...,k_{ein}\}$ betrachtet. Ansonsten bleibt der oben beschriebene Ansatz der gleiche, also $\overline{S}(k_{ein}) = S_0$,

$$\overline{\dot{S}}\left(k_{ein}\right) = \dot{S}_0, \quad \overline{\ddot{S}}\left(k_{ein}\right) = \ddot{S}_0 .$$
Mit $\ddot{S}(k) = \ddot{S}_0$ ergibt sich die erste zeitliche Ableitung $\dot{S}(k)$ zu $\dot{S}(k) = \dot{S}(k_{ein}) + \ddot{S}_0 k =$

$$\dot{S}(k_{ein}) = \dot{S}_0 + \frac{n_R - 1}{2}\ddot{S}_0 \qquad \dot{S}_0 = \frac{1}{n_R}\sum_k \dot{S}(k) .$$
$\dot{S}(k_{ein})-\ddot{S}_0\cdot|k|$ mit ⬚ aus der Bedingung ⬚ Die Sollwertfolge S(k) ergibt sich

$$S(k) = S(k_{ein}) - \dot{S}_0 \cdot |k| + \frac{\ddot{S}_0}{2}\left(|k|^2 - |k| n_R\right) = S_{init} \qquad S(k_{ein}) = S_0 + \frac{\dot{S}_0}{2}\left(n_R - 1\right) + \frac{\ddot{S}_0}{12}\left(n_R^2 - 1\right)$$
dann zu ⬚ mit ⬚ aus

$$S_0 = \frac{1}{n_R}\sum_k S(k) .$$
der Bedingung

Im Falle eines Positionssignals p(t) als Sollwert S(t) ergibt sich dann das Positionssignal p(k) für die Vergan-

$$p(k) = p(k_{ein}) - v_0 \cdot |k| + \frac{a_0}{2}\left(|k|^2 - |k| n_R\right)$$
genheit $\{k_{ein}-n_R+1,...,k_{ein}\}$ zu ⬚ mit

$$p(k_{ein}) = p_0 + \frac{v_0}{2}\left(n_R - 1\right) + \frac{a_0}{12}\left(n_R^2 - 1\right) \qquad p_0 = \frac{1}{n_R}\sum_k p(k) .$$
aus der Bedingung

Das Glättungsfilter 10 kann daher ohne Kenntnis des vergangenen Bewegungsprofils nur aus der aktuellen Bewegungsphase $(S_0,\dot{S}_0,\ddot{S}_0)$ initialisiert werden, sodass die Bewegung stetig an der aktuellen Bewegungsphase $(S_0,\dot{S}_0,\ddot{S}_0)$ fortgesetzt wird.

Die Erfindung wurde oben mit einer Bewegungsphase $(S_0,\dot{S}_0,\ddot{S}_0)$ mit drei Bewegungsanteilen, nämlich $S_0,\dot{S}_0,\ddot{S}_0$, beschrieben. Selbstverständlich kann die Erfindung aber auch auf andere Bewegungsphasen, mit dem Sollwert S und zeitlichen Ableitungen davon, mit mehr oder weniger Bewegungsanteilen verallgemeinert werden. Wenn beispielsweise eine Bewegungsphase $(S_0,\dot{S}_0)$ mit zwei Bewegungsanteilen, beispielsweise die Position p als Sollwert S und die Geschwindigkeit v als zeitliche Ableitung, verwendet wird, dann gilt das Obige analog. Ebenso im Fall mit mehr als drei Bewegungsanteilen. Der erfindungsgemäße Ansatz kann daher wie folgt auf eine beliebige Bewegungsphase $(S, \dot{S}, ...,$

$$S^{(x)} = \frac{d^{(x)}}{dt^{(x)}}S ,$$
$S^{(x)}$) mit der höchsten zeitlichen Ableitung ⬚ mit der positiven ganzen Zahl $x \in \square$, verallgemeinert werden.

Allgemein wird für die Initialisierung des Glättungsfilters 10 für die höchste zeitliche Ableitung des Sollwertes $S^{(x)}$ in der Bewegungsphase $(S, \dot{S}, ..., S^{(x)})$ für das vergangene Zeitintervall $[t_{ein}-t_R, t_{ein}]$ bzw. $\{k_{ein}-n_R+1,...,k_{ein}\}$ eine Funktion f(t), f(k), z.B. eine konstante Funktion f=const., angenommen $(S^{(x)}=f)$, deren Mittelwert $\overline{f}$ über das vergangene Zeitintervall $[t_{ein}-t_R, t_{ein}]$ bzw. $\{k_{ein}-n_R+1,...,k_{ein}\}$ dem zum Zeitpunkt $t_{ein}$ bzw. $k_{ein}$ der Aktivierung des Glättungsfilters 10 aktuellen Wert $S_0^{(x)}$ der höchsten zeitlichen Ableitung entspricht, also $\overline{f} = S_0^{(x)}$. Die Funktion f muss daher im Zeitintervall $[t_{ein}-t_R, t_{ein}]$ bzw. $\{k_{ein}-n_R+1,...,k_{ein}\}$ stückweise zeitlich integrierbar sein. Die niedrigeren zeitlichen Ableitungen x={0, 1, ..., x-1} der Bewegungsphase $(S, \dot{S}, ..., S^{(x)})$ ergeben sich dann aus der notwendigen Bedingung $\overline{S}(t_{ein}) = S_0$,

$$\overline{\dot{S}}\left(t_{ein}\right) = \dot{S}_0, \quad ..., \quad \overline{S^{(x-1)}}\left(t_{ein}\right) = S_0^{(x-1)}$$
bzw.

$$\overline{S}(k_{ein}) = S_0, \quad \overline{\dot{S}}\left(k_{ein}\right) = \dot{S}_0, \quad ..., \quad \overline{S^{(x-1)}}\left(k_{ein}\right) = S_0^{(x-1)} ,$$
um die Bewegung nach dem Aktivieren stetig fortsetzen zu können. Daraus kann das Sollwertprtofil $S_{init}$ zum Initialisieren des Glättungsfilters 10 für das Zeitintervall $[t_{ein}-t_R, t_{ein}]$ bzw. $\{k_{ein}-n_R+1,...,k_{ein}\}$ ermittelt werden. Die nullte zeitliche Ableitung ist dabei definitionsgemäß der Sollwert S selbst.

Die Initialisierung des Glättungsfilters 10 beim Aktivieren mit der Folge $\{p(k_{ein}-n_R+1), ..., p(k_{ein})\}$ benötigt Rechenzeit proportional zu $n_R$, also $O(n_R)$. Die Berechnung des Ausgangs des Glättungsfilters 10 in jedem Taktschritt braucht ebenfalls $O(n_R)$ Zeit. Damit ist der Rechenaufwand für das Glättungsfilter 10 sehr gering. Dieser Aufwand kann sogar auf $O(1)$ reduziert werden, wenn man den Sollwert $S(k)$ in der Folge $S_{init}$ zum Initialisieren in jedem Taktschritt n laufend aktualisiert, anstatt die ganze Folge beim Aktivieren des Glättungsfilters 10 zu berechnen. Dazu kann ein Ringbuffer 20 geführt werden, in dem $n_R$ Speicherplätze vorhanden sind und der jeweils neue Wert von $S(k)$ der Folge $S_{init}$ den ältesten Wert von $S(k-n_R)$ aus dem Ringbuffer 20 schiebt, wie in Fig.8 angedeutet. Der Ringbuffer 20 ist beispielsweise im Glättungsfilter 10 oder im Antriebsregler AR implementiert. Hier ist nochmals anzumerken, dass der Sollwert $S(k)$ der Folge $S_{init}$ nicht dem aktuellen Sollwert S zum Bewegen der Antriebsachse A, Ai entspricht.

Der Wert der nochmaligen zeitlichen Ableitung $S^{(x+1)}$ der höchsten zeitlichen Ableitung $S^{(x)}$ des Sollwertes S in der Bewegungsphase $(S, \dot{S}, ..., S^{(x)})$ wird durch das Glättungsfilter 10 zu jeden Zeitpunkt $t \geq t_{ein}$ bzw. $k \geq k_{ein}$ begrenzt. Im Beispiel einer Bewegungsphase (p, v, a) würde folglich durch den Glättungsfilter 10 die zeitliche Ableitung der Beschleunigung a, also der Ruck j limitiert. Unter der Annahme $S^{(x)}_{max} = - S^{(x)}_{min}$, ergibt sich der maximal Wert der

$$S^{(x+1)}_{max} = \pm \frac{2 \cdot S^{(x)}_{max}}{(n_R - 1)t_a},$$

nochmaligen zeitlichen Ableitung zu bzw. im zeitkontinuierlichen Fall

$$S^{(x+1)}_{max} = \pm \frac{2 \cdot S^{(x)}_{max}}{t_R}.$$

Im Fall der Beschleunigung a als höchste zeitliche Ableitung $S^{(x)}$ in der Bewegungsphase,

$$j_{max} = \pm \frac{2 \cdot a_{max}}{(n_R - 1)t_a}, \qquad j_{max} = \pm \frac{2 \cdot a_{max}}{t_R},$$

würde der Ruck j mit im zeitkontinuierlichen Fall mit begrenzt.

## Patentansprüche

1. Verfahren zum Steuern der Bewegung einer Antriebsachse (A, Ai) einer Antriebseinheit (AE), wobei die Bewegung der Antriebsachse (A, Ai) in einem Taktschritt n durch die Vorgabe eines Sollwertes (S(t), S(k)) der Bewegung geregelt wird, wodurch sich eine Bewegungsphase $(S(t), \dot{S}(t), ..., S(t)^{(x)})$, $(S(k), \dot{S}(k), ..., S(k)^{(x)})$ der Bewegung der Antriebsachse (A, Ai) ergibt, wobei ein Glättungsfilter (10) in Form eines Mittelwertfilters den neuen Sollwert als Mittelwert $(\overline{S}(t), \overline{S}(k))$ aus den um eine Filterzeit $(t_R, n_R)$ in der Vergangenheit liegenden vergangenen Sollwerten (S(t), S(k)) berechnet, **dadurch gekennzeichnet, dass** der Glättungsfilter (10) während der Bewegung mit einer aktuellen Bewegungsphase $(S_0, \dot{S}_0, ..., S_0^{(x)}$ zu einem Zeitpunkt $(t_{ein}>0, k_{ein}>0)$ aktiviert wird, **dass** für die höchste zeitliche Ableitung $S(t)^{(x)}$, $S(k)^{(x)}$ des Sollwertes (S(t), S(k)) der Bewegungsphase $(S(t), \dot{S}(t), ..., S(t)^{(x)})$, $(S(k), \dot{S}(k), ..., S(k)^{(x)})$ für das vergangene Zeitintervall $([t_{ein}-t_R, t_{ein}], \{k_{ein}-n_R+1,...,k_{ein}\})$ eine Funktion f(t), f(k) angenommen wird, deren Mittelwert $\overline{f}$ über das vergangene Zeitintervall $([t_{ein}-t_R, t_{ein}], \{k_{ein}-n_R+1,...,k_{ein}\})$ dem zum Zeitpunkt $(t_{ein}, k_{ein})$ der Aktivierung des Glättungsfilters (10) aktuellen Wert $(S_0^{(x)})$ der höchsten zeitlichen Ableitung $(S(t)^{(x)}, S(k)^{(x)})$ entspricht, **dass** sich die niedrigeren zeitlichen Ableitungen $(S(t), \dot{S}(t), ..., S(t)^{(x-1)})$, $(S(k), \dot{S}(k), ..., S(k)^{(x-1)})$ des Sollwertes (S(t), S(k)) für das vergangene Zeitintervall $([t_{ein}-t_R, t_{ein}], \{k_{ein}-n_R+1,...,k_{ein}\})$ aus der Bedingung ergeben, dass die Mittelwerte $\left(\overline{S}, \overline{\dot{S}}, ..., \overline{S^{(x-1)}}\right)$ der niedrigeren zeitlichen Ableitungen des Sollwertes (S(t), S(k)) über das vergangene Zeitintervall $([t_{ein}-t_R, t_{ein}], \{k_{ein}-n_R+1,...,k_{ein}\})$ jeweils dem zum Zeitpunkt $(t_{ein}, k_{ein})$ der Aktivierung des Glättungsfilters (10) aktuellen Werten $(S_0, \dot{S}_0, S_0^{(x-1)})$ der niedrigeren zeitlichen Ableitungen des Sollwertes (S(t), S(k)) entsprechen **und dass** der Glättungsfilter (10) beim Aktivieren für das vergangene Zeitintervall $([t_{ein}-t_R, t_{ein}], \{k_{ein}-n_R+1,...,k_{ein}\})$ mit den ermittelten Sollwerten (S(t), S(k)) für dieses vergangene Zeitintervall $([t_{ein}-t_R, t_{ein}], \{k_{ein}-n_R+1,...,k_{ein}\})$ als Sollwertprofil $(S_{init})$ initialisiert wird.

2. Verfahren nach Anspruch 1, **dadurch gekennzeichnet, dass** für die höchste zeitliche Ableitung $S(t)^{(x)}$, $S(k)^{(x)}$ des Sollwertes (S(t), S(k)) für das vergangene Zeitintervall ([$t_{ein}$-$t_R$, $t_{ein}$], {$k_{ein}$-$n_R$+1,...,$k_{ein}$}) eine konstante Funktion (f(t), f(k)) angenommen wird.

3. Verfahren nach Anspruch 1 oder 2, **dadurch gekennzeichnet, dass** der Sollwert (S(k)) des Sollwertprofils ($S_{init}$) in jedem Taktschritt (n) aktualisiert wird und in einem Ringpuffer (20) mit $n_R$ Speicherplätzen gespeichert wird, wobei der aktualisierte Sollwert (S(k)) den ältesten Sollwert (S(k-$n_R$)) aus dem Ringbuffer (20) schiebt, wobei die im Ringpuffer (20) gespeicherten Sollwerte (S(k-$n_R$, ..., S(k)) das Sollwertprofil ($S_{init}$) zum Initialisieren des Glättungsfilters (10) bilden.

## Claims

1. Method for controlling the movement of a drive axis (A, Ai) of a drive unit (AE), wherein the movement of the drive axis (A, Ai) is controlled in a cycle step (n) by specifying a setpoint (S(t), S(k)) of the movement, by means of which there results a movement phase ((S(t), $\dot{S}$(t), ..., $S(t)^{(x)}$), (S(k), $\dot{S}$(k), ..., $S(k)^{(x)}$)) of the movement of the drive axis (A, Ai), wherein a smoothing filter (10) in the form of an averaging filter calculates the new setpoint as the mean value ($\overline{S}$(t), $\overline{S}$(k)) of the previous setpoints (S(t), S(k)) at a filter time ($t_R$, $n_R$) in the past, **characterized in that** the smoothing filter (10) is activated during the movement with a current movement phase (($S_0$, $\dot{S}_0$, ..., $S_0^{(x)}$)) at a time ($t_{ein}$>0, $k_{ein}$>0), **that,** for the previous time interval ([$t_{ein}$-$t_R$, $t_{ein}$], { $k_{ein}$-$n_R$+1,...,$k_{ein}$}), a function (f(t), f(k)) is assumed for the highest time derivative ($S(t)^{(x)}$, $S(k)^{(x)}$) of the setpoint ($\overline{S}$(t), $\overline{S}$(k)) in the movement phase ((S(t), $\dot{S}$(t), ..., $S(t)^{(x)}$), (S(k), $\dot{S}$(k), ..., $S(k)^{(x)}$)), the mean value ($\overline{f}$) of which over the previous time interval ([$t_{ein}$-$t_R$, $t_{ein}$], {$k_{ein}$-$n_R$+1,...,$k_{ein}$}) corresponds to the current value ($S_0^{(x)}$) of the highest time derivative ($S(t)^{(x)}$, $S(k)^{(x)}$) at the time ($t_{ein}$, $k_{ein}$) of activation of the smoothing filter (10), **that** for the previous time interval ([$t_{ein}$-$t_R$, $t_{ein}$], {$k_{ein}$-$n_R$+1,...,$k_{ein}$}), the lower time derivatives ((S(t), S(t), ..., $S(t)^{(x-1)}$), (S(k), S(k), ..., $S(k)^{(x-1)}$)) of the setpoint (S(t), S(k)) are given by the condition that the mean values $\left(\left(\overline{S}, \overline{\dot{S}}, ..., \overline{S^{(x-1)}}\right)\right)$ of the lower time derivatives of the setpoint (S(t), S(k)) over the previous time interval ([$t_{ein}$-$t_R$, $t_{ein}$], {$k_{ein}$-$n_R$+1,...,$k_{ein}$}) in each case correspond to the current values (($S_0$, $\dot{S}_0$, ..., $S_0^{(x-1)}$)) of the lower time derivatives of the setpoint (S(t), S(k)) at the time ($t_{ein}$, $k_{ein}$) of activation of the smoothing filter (10), **and that** on activation, for the previous time interval ([$t_{ein}$-$t_R$, $t_{ein}$], {$k_{ein}$-$n_R$+1,...,$k_{ein}$}), the smoothing filter (10) is initialized with the calculated setpoints (S(t), S(k)) for this previous time interval ([$t_{ein}$-$t_R$, $t_{ein}$], {$k_{ein}$-$n_R$+1,...,$k_{ein}$}) as setpoint profile ($S_{init}$).

2. The method according to claim 1, **characterized in that,** for the previous time interval ([$t_{ein}$-$t_R$, $t_{ein}$], {$k_{ein}$-$n_R$+1,...,$k_{ein}$}), a constant function (f(t), f(k)) is assumed for the highest time derivative $S(t)^{(x)}$, $S(k)^{(x)}$ of the setpoint (S(t), S(k)).

3. The method according to claim **Fehler! Verweisquelle konnte nicht gefunden werden.** or **Fehler! Verweisquelle konnte nicht gefunden werden., characterized in that** the setpoint (S(k)) of the setpoint profile ($S_{init}$) is updated in every cycle step (n) and stored in a circular buffer (20) with $n_R$ storage locations, wherein the updated setpoint (S(k)) shifts the oldest setpoint (S(k-$n_R$)) out of the circular buffer 20), wherein the setpoints (S(k-$n_R$, ..., S(k)) stored in the circular buffer (20) form the setpoint profile ($S_{init}$) for initializing the smoothing filter (10).

## Revendications

1. Procédé de commande du mouvement d'un axe d'entraînement (A, Ai) d'une unité d'entraînement (UE), le mouvement de l'axe d'entraînement (A, Ai) étant régulé dans un pas d'horloge n par le préréglage d'une valeur de consigne (S(t), S(k)) du mouvement, ce qui crée une phase de mouvement (S(t), $\dot{S}$(t),..., $S(t)^{(x)}$), (S(k), $\dot{S}$(k)...,$S(k)^{(x)}$) du mouvement de l'axe d'entraînement (A, Ai), un filtre de lissage (10) installé sous forme d'un filtre intermédiaire calculant la nouvelle valeur de consigne comme une valeur moyenne ($\overline{S}$(t), ($\overline{S}$(k)) sur la base d'anciennes valeurs de consignes (S(t), S(k)) âgées d'un temps de filtrage ($t_R$, $n_R$), **caractérisé en ce que** le filtre de lissage (10) est activé pour une phase de mouvement effective ($S_0$, $\dot{S}_0$,...,$S_0^{(x)}$) à un instant ($t_{ein}$>0, $k_{ein}$>0) pendant le mouvement, **que,** pour la dérivée temporelle la plus élevée $S(t)^{(x)}$, $S(k)^{(x)}$ de la valeur de consigne (S(t), S(k)) de la phase de mouvement (S(t), S(t),...,$S(t)^{(x)}$), (S(k), S(k),...,$S(k)^{(x)}$) pour l'intervalle temporel écoulé ([$t_{ein}$-$t_R$, $te_{in}$],

$\{k_{ein}\text{-}n_R\text{+}1,...,k_{ein}\})$, une fonction f(t), f(k) est adoptée, dont la valeur moyenne $\overline{f}$ au cours de l'intervalle temporel écoulé ($[t_{ein}\text{-}t_R, t_{ein}]$, $\{k_{ein}\text{-}n_R\text{+}1,...,k_{ein}\})$ correspond à la valeur actuelle ($S_0^{(x)}$) de la dérivée temporelle la plus élevée ($S(t)^{(x)}$, $S(k)^{(x)}$) au moment ($t_{ein}$, $k_{ein}$) de l'activation du filtre lissant (10), **que** les dérivées temporelles les plus basses ($S(t)$, $\dot{S}(t)$,...,$S(t)^{(x-1)}$), ($S(k)$, $\dot{S}(k)$,...,$S(k)^{(x-1)}$) de la valeur de consigne ($S(t)$, $S(k)$) de l'intervalle temporel écoulé

($[t_{ein}\text{-}t_R, t_{ein}]$, $\{k_{ein}\text{-}n_R\text{+}1,...,k_{ein}\})$ découlent de la condition que la valeur moyenne $\left(\overline{\mathbf{S}}, \overline{\dot{\mathbf{S}}}, ..., \overline{\mathbf{S}^{(x-1)}}\right)$ des dérivées temporelles les plus basses de la valeur de consigne ($S(t)$, $S(k)$) au cours de l'intervalle temporel écoulé ($[t_{ein}\text{-}t_R$, $t_{ein}]$, $\{k_{ein}\text{-}n_R\text{+}1.,k_{ein}\})$ correspond à chaque fois aux valeurs actuelles ($S_0, \dot{S}_0, ...,S_0^{(x-1)}$) des dérivées temporelles les plus basses de la valeur de consigne ($S(t)$, $S(k)$) à l'instant ($t_{ein}$, $k_{ein}$) de l'activation du filtre de lissage (10), **et que** le filtre de lissage (10) est initialisé à l'activation de l'intervalle temporel écoulé ($[t_{ein}\text{-}t_R, t_{ein}]$, $\{k_{ein}\text{-}n_R\text{+}1, ...,k_{ein}\})$ en tant que profil de valeurs de consigne ($S_{init}$) avec les valeurs de consigne calculées ($S(t)$, $S(k)$) pour cet intervalle temporel écoulé ($[t_{ein}\text{-}t_R, t_{ein}]$, $\{k_{ein}\text{-}n_R\text{+}1,...,k_{ein}\})$.

2. Procédé selon la revendication 1, **caractérisé en ce qu'**une fonction constante (f(t), f(k)) est adoptée pour la dérivée temporelle la plus élevée $S(t)^{(x)}$, $S(k)^{(x)}$ de la valeur de consigne ($S(t)$, $S(k)$) pendant l'intervalle de temps écoulé ($[t_{ein}\text{-}t_R, t_{ein}]$, $\{k_{ein}\text{-}n_R\text{+}1,...,k_{ein}\})$.

3. Procédé selon la revendication 1 ou 2, **caractérisé en ce que** la valeur de consigne ($S(k)$) du profil de valeurs de consigne ($S_{init}$) est actualisée à chaque pas d'horloge (n) et mémorisée dans une mémoire tampon circulaire (20) avec $n_R$ emplacements de mémoire, la valeur de consigne actualisée ($S(k)$) effaçant la plus ancienne valeur de consigne ($S(k\text{-}n_R)$) en provenance de la mémoire tampon circulaire (20), les valeurs de consigne ($S(k\text{-}n_R,..., S(k)$) enregistrées dans la mémoire tampon circulaire (20) constituant le profil de valeurs de consigne ($S_{in}it$) au démarrage du filtre de lissage (10).

Fig. 1

EP 3 203 337 B1

EP 3 203 337 B1

Fig. 2

Fig. 3

Fig. 4

Fig. 5

Fig. 8

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8863669 B2
- US 4603286 A
- EP 419705 A1
- EP 477412 A1